# EUROPEAN PATENT SPECIFICATION

(11) **EP 3 920 405 B1**
(45) Date of publication and mention of the grant of the patent: **29.04.2026**
(21) Application number: 19913074.1
(22) Date of filing: 28.11.2019
(51) Int. Cl.: H02P 9/12

(54) **POWER CONVERTER AND CONTROL METHOD THEREOF**
LEISTUNGSWANDLER UND STEUERUNGSVERFAHREN DAFÜR
CONVERTISSEUR DE PUISSANCE ET SON PROCÉDÉ DE COMMANDE

(30) Priority: 01.02.2019 JP 2019017120
(43) Date of publication of application: 08.12.2021
(73) Proprietor: HITACHI INDUSTRIAL EQUIPMENT SYSTEMS CO., LTD., Chiyoda-ku Tokyo 101-0022 (JP)
(72) Inventor: IWASE, Yuuta, Tokyo 101-0022 (JP); TAGUCHI, Yoshiyuki, Tokyo 101-0022 (JP)
(74) Representative: MERH-IP Matias Erny Reichl Hoffmann Patentanwälte PartG mbB
(86) International application number: PCT/JP2019/046662
(87) International publication number: WO 2020/158148

(56) References cited:
- EP-A1- 2 400 652
- JP-A- 2005 192 325
- JP-A- 2015 089 197
- JP-A- 2016 178 735
- US-A1- 2017 030 984
- US-A1- 2017 030 984

## Description

### TECHNICAL FIELD

The present invention relates to a power converter and a method of controlling the same, and relates to a power converter to be connected to a power generator for application and a method of controlling the same.

### BACKGROUND ART

After the Greatest East Japan Earthquake, hydraulic or wind-power based small-sized power generators or others capable of supplying necessary power for individuals have been popularized. The small-sized power generator is made of a power generator and a power converter such as a converter connected to the power generator. As the power generator, for example, a permanent magnet synchronous power generator is utilized. In this case, a rotor of the power generator is rotated by the hydraulic power or the wind power, so that an induced voltage is generated. In a case of instable hydraulic power or wind power, a frequency of the generated induced voltage is instable. The power converter is connected to the power generator so as to be able to convert the voltage to a stable direct-current voltage and supply the electric power even in the instable frequency state.

In the conversion of the alternating-current voltage to the direct-current voltage, it is popular to use a smoothing circuit mainly made of a rectifier diode bridge using a plurality of diode elements and a smoothing capacitor for use in smoothing the voltage to convert the alternating-current voltage to the direct-current voltage. In such a configuration, decrease in the rotation number of the power generator makes it difficult to supply the stable direct-current voltage. Therefore, the power converter having a switching element such as IGBT (Insulated Gate Bipolar Transistor) is connected to the power generator. By control for switching the switching element, rise in the direct-current voltage is operated while a power factor is improved. In this manner, the power converter can supply the stable direct-current voltage even in the decrease in the rotation number of the power generator.

In the control for the switching element, a motor constant of the power generator and demagnetizing-current value (threshold) information of the power generator are necessary. In a case without such information, the power converter cannot control the power generator. The number of poles of the motor, setting values of a resistive component of a coil, an inductor component and others and an adjustment value adjusted by an auto tuning function are set as the motor constant in the power converter. Also, the power converter makes protection for overcurrent so that the demagnetizing-current value does not exceed its current value to protect the power generator and others.

However, an electric current that is equal to or larger than the demagnetizing current possibly flows in the power generator because of, for example, earth fault, improper wiring or others, which results in irreversible demagnetization of a magnet in the power generator. Even once when the power generator is demagnetized, its induced voltage decreases. The induced voltage decreases even in the rotation at the same rotation number as a rotation number before the demagnetization, and therefore, the designed power cannot be supplied. Besides, the characteristics of the motor constant are also changed by the demagnetization, and therefore, the control of the power converter is often instable to cause vibration, noises, heating or others of the power generator, and unexpected accidents possibly occur. Since it is physically difficult to avoid the power generator from being demagnetized by the earth fault, the improper wiring or others, it is necessary to construct a system that prevents progression of the demagnetization by finding the demagnetization phenomenon of the power generator soon if the power generator is magnetized, and then, making an alert showing abnormality information to a display unit of the power converter or a higher-level device through communication means or others.

It can be determined whether the demagnetization exists or not by measurement of a value of the induced voltage or a voltage waveform in usage of a measuring device such as an oscilloscope or a power meter. However, it is unpractical to place the measuring device into the activating system to invest the values.

As techniques of estimating the induced voltage, techniques described in, for example, a Patent Document 1 and a Patent Document 2 are exemplified.
Patent Document 3 discloses an electric power accumulating means which includes a DC bus connected to an electric power accumulator and which supplies a direct current, a smoothing capacitor provided to the DC bus, and a voltage detector that detects a voltage of the DC bus.

### RELATED ART DOCUMENTS

### PATENT DOCUMENTS

Patent Document 1: Japanese Patent Application Laid-Open Publication No. 2013-42630
Patent Document 2: Japanese Patent Application Laid-Open Publication No. 2014-192905
Patent Document 3: EP 2 400 652 A1

### SUMMARY OF THE INVENTION

### PROBLEMS TO BE SOLVED BY THE INVENTION

For estimating the induced voltage, the techniques described in the Patent Document 1 and the Patent Document 2 have a prerequisite of a state in which the switching element configuring the power converter operates, and the techniques need information of the electric current flowing in the power generator. In other words, the instable control state of the power converter due to the occurrence of the demagnetization is the prerequisite for estimating the induced voltage. Therefore, in estimating the induced voltage, the vibration and the noises cannot be avoided. And, the Patent Documents 1 and 2 describe a motor for driving an object but do not describe the power generator.

A purpose of the present invention is to provide a power converter capable of preventing the occurrence of the vibration, the noises and others and capable of detecting the demagnetization.

The above and other objects and novel characteristics of the present invention will be apparent from the description of the present specification and the accompanying drawings.

### MEANS FOR SOLVING THE PROBLEMS

The summary of the typical aspects of the inventions disclosed in the present application will be briefly described as follows.

The above cited problems are solved in accordance with the appended claims. In particular, the herein-described power converter includes: a storage storing a motor constant of a power generator; a calculator calculating a reference voltage by using a motor constant and a rotation number of a rotary machine; a comparator comparing the reference voltage with a measurement voltage measured during rotation of the rotary machine and detecting a difference between the voltages; and an alert unit making an alert when the difference exceeds a predetermined threshold.

### EFFECTS OF THE INVENTION

The effects obtained by the typical aspects of the present invention disclosed in the present application will be briefly described as follows.

A power converter capable of preventing the occurrence of the vibration, the noises and others and capable of detecting the demagnetization can be provided.

### BRIEF DESCRIPTIONS OF THE DRAWINGS

FIG. 1 is a block diagram showing a configuration of a power converter in a first embodiment;
FIG. 2 is a circuit diagram showing a configuration of a frequency detection circuit in the first embodiment;
FIG. 3 is a timing chart for explaining the frequency detection circuit and a rotation-number regenerator in the first embodiment;
FIG. 4 is a voltage waveform diagram showing a star-up sequence of the power converter in the first embodiment;
FIG. 5 is a voltage waveform diagram showing a star-up sequence of the power converter in the first embodiment; and
FIG. 6 is a voltage waveform diagram showing a star-up sequence of a power converter in a second embodiment.

### BEST MODE FOR CARRYING OUT THE INVENTION

In the embodiments described below, the invention will be described in a plurality of sections or embodiments when required as a matter of convenience. However, these sections or embodiments are not irrelevant to each other unless otherwise stated, and the one relates to the entire or a part of the other as a modification example, details, or a supplementary explanation thereof. Also, in the embodiments described below, when referring to the number of elements (including number of pieces, values, amount, range, and the like), the number of the elements is not limited to a specific number unless otherwise stated or except the case where the number is apparently limited to a specific number in principle. The number larger or smaller than the specified number is also applicable.

Further, in the embodiments described below, it goes without saying that the components (including element steps) are not always indispensable unless otherwise stated or except the case where the components are apparently indispensable in principle. Similarly, in the embodiments described below, when the shape of the components, positional relation thereof, and the like are mentioned, the substantially approximate and similar shapes and the like are included therein unless otherwise stated or except the case where it is conceivable that they are apparently excluded in principle. The same goes for the numerical value and the range described above.

Hereinafter, embodiments of the present invention will be described in detail with reference to the accompanying drawings. Note that the same components are denoted by the same reference symbols throughout all the drawings for describing the embodiments, and the repetitive description thereof will be omitted. The following explanation exemplifies a power converter connected to a rotary-machine driving apparatus such as a waterwheel, a windmill or others, and a power converter for use in an engine generator connected to the rotary-machine driving apparatus that is rotated by an internal combustion of gas, gasoline (petrol) or others.

### (First Embodiment)

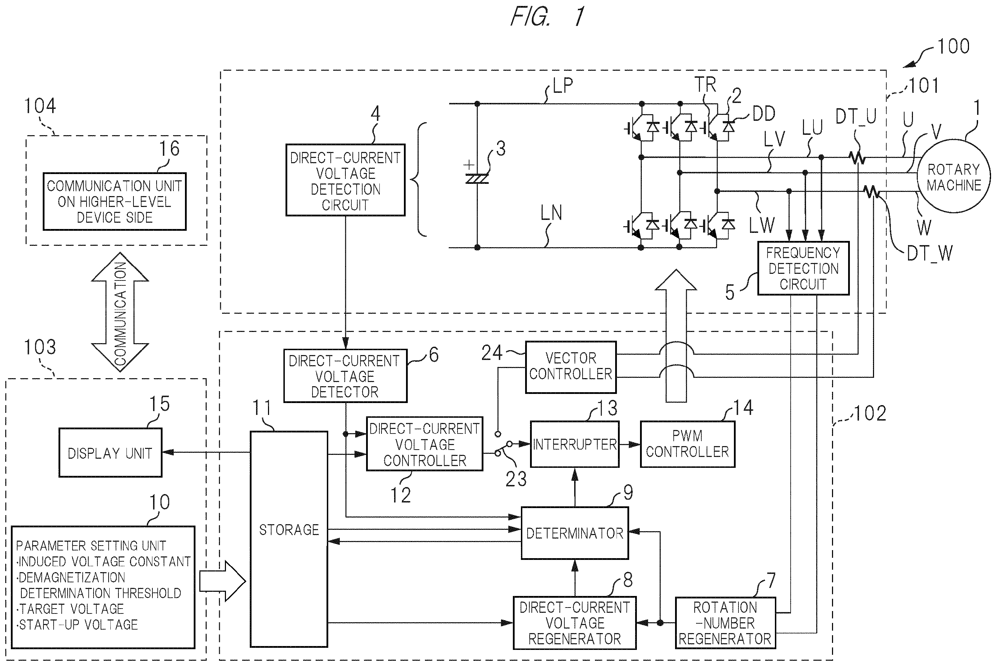

FIG. 1 is a block diagram showing a configuration of a power converter in a first embodiment. In this diagram, a term "100" indicates the power converter, a term "1" indicates a rotary machine (power generator unit) connected to the power converter 100, and a term "104" indicates a higher-level device connected to the power converter 100. The power converter 100 includes a circuit unit 101, a microcomputer unit 102 and an operation unit 103. Each of the circuit unit 101, the microcomputer unit 102 and the operation unit 103 is made of a plurality of circuit blocks. However, this drawing illustrates a function or a process of each circuit block in order to avoid the drawing from being complicated.

The rotary machine 1 is made of a motor externally rotated by a waterwheel, a windmill, an engine or others. By the rotation of the rotary machine 1, the rotary machine 1 generates three-phase alternating-current induced voltages U, V and W. The generated induced voltages U, V and W are supplied to the power converter 100. In the power converter 100, the induced voltages U, V and W are supplied to the circuit unit 101.

### <Circuit Unit>

The circuit unit 101 includes a plurality of switching elements 2, a smoothing capacitor 3, a direct-current voltage detection circuit 4, a frequency detection circuit 5, and detection circuits DT_U and DT_W. The switching element 2 includes an IGBT "TR" and a freewheeling diode "DD" connected in parallel to a collector/emitter path of the IGBT. As shown in FIG. 1, the switching element 2 is connected between wirings LP and LN and wirings LU, LV and LW to which the induced voltages U, V and W are supplied.

The frequency detection circuit 5 is connected to the wirings LU, LV and LW. The frequency detection circuit 5 outputs a digital signal containing phase information of the rotor of the rotary machine 1 on the basis of the three-phase alternating-current induced voltages U, V and W generated by the rotary machine 1.

The detection circuit DT_U is connected between the rotary machine 1 and the wiring LU, and the detection circuit DT_W is connected between the rotary machine 1 and the wiring LW. Each of the detection circuits DT_U and DT_W detects a current waveform of the wirings LV and LW, converts the detected current waveform into an analog signal, and supplies the analog signal to the microcomputer unit 102.

To the switching element 2, the microcomputer unit 102 supplies a PWM (Pulse Width Modulation) signal for controlling the switching element 2. When the switching of the IGBT TR inside the switching element 2 is controlled by the PWM signal, the three-phase alternating-current induced voltages U, V and W are converted to a direct-current voltage by the switching element 2 and the smoothing capacitor 3, and the direct-current voltage is risen and supplied as the power from the power converter 100 to outside.

When the switching of the switching element 2 is not operated by the PWM signal, the IGBT TR inside the switching element 2 is turned, for example, OFF. Even in this case, the electric current flows between the wirings LU, LV and LW and the wirings LP and LN through the freewheeling diode DD. In this case, since the freewheeling diode DD operates as a rectification diode, the smoothing capacitor 3 and the freewheeling diode DD can be regarded as forming a three-phase full-wave rectification circuit including the smoothing circuit. In other words, when the IGBT TR inside the switching element 2 does not operate (is in a non-operation state), the three-phase alternating-current induced voltages U, V and W are converted into the direct-current voltage by the three-phase full-wave rectification circuit. On the other hand, when the switching of the IGBT TR inside the switching element 2 is operated, the three-phase alternating-current induced voltages can be converted to the direct-current voltage at the same time as the improvement of the power factor of the three-phase alternating-current induced voltages U, V and W and the rising operation of the direct-current voltage.

The direct-current voltage detection circuit 4 detects the direct-current voltage on both ends of the smoothing capacitor 3, and supplies the detected direct-current voltage as the analog signal to the microcomputer unit 102. In other words, the direct-current voltage that has been converted from the three-phase alternating-currents is detected, and the detected direct-current voltage is supplied to the microcomputer unit 102.

### <Operation Unit>

The operation unit 103 includes a parameter setting unit 10 and a display unit 15. The display unit 15 displays information supplied from the microcomputer unit 102. To the storage 11 explained later, the parameter setting unit 10 sets parameters that are necessary for the operation of the power converter 100. The parameters to be set are an induced voltage constant, a demagnetization determination threshold, a target voltage and a start-up voltage. These parameters are stored in the storage 11 by, for example, a user's operation of the parameter setting unit 10. Note that the operation unit 103 includes a "communication unit on the power conversion side" eliminated in FIG. 1. This communication unit on the power conversion side communicates with a "communication unit on the higher-level device side" 16 inside the higher-level device 104. For example, the power converter 100 is notified of an instruction of the higher-level device 104 through the communication. From the communication unit on the power conversion side, the higher-level device 104 is notified of information related to a state of the demagnetization or others.

### <Microcomputer Unit>

In FIG. 1, the process executed in the microcomputer unit 102 is illustrated as the circuit block. The microcomputer unit 102 includes a direct-current voltage detector 6, a rotation-number regenerator 7, a direct-current voltage regenerator (calculator) 8, a determinator (comparator) 9, the storage 11, a direct-current voltage controller 12, an interrupter 13, a PWM controller 14, a switch 23 and a vector controller 24.

The direct-current voltage detector 6 converts the direct-current voltage of the analog signal that is supplied from the direct-current voltage detection circuit 4 into a digital signal, and outputs the digital signal as the direct-current voltage information. The storage 11 has, for example, electrically-rewritable nonvolatile characteristics such as a flash memory. The storage 11 stores the parameters that are set by the parameter setting unit 10, and stores the information, which is displayed on the display unit (alert unit) 15 and of which the higher-level device (alert unit) 104 is notified.

The direct-current voltage controller 12 executes a control so that a difference between the direct-current voltage information output from the direct-current voltage detector 6 and the target voltage set by the parameter setting unit 10 is "0".

The rotation-number regenerator 7 regenerates the rotation number of the rotary machine 1 or others on the basis of the phase information of the rotor inside the rotary machine 1 supplied from the frequency detection circuit 5. The direct-current voltage regenerator 8 calculates a value of the direct-current voltage depending on the regenerated rotation number by calculating the induced voltage constant set by the parameter setting unit 10 and the rotation number of the rotary machine 1 regenerated by the rotation-number regenerator 7, and outputs the calculated value of the direct-current voltage as a direct-current voltage regeneration value.

To the determinator 9, the target voltage, the start-up voltage and the demagnetization determination threshold set by the parameter setting unit 10 are supplied from the storage 11, the direct-current voltage regeneration value is supplied from the direct-current voltage regenerator 8, the regenerated rotation number of the rotary machine 1 is supplied from the rotation-number regenerator 7, and the direct-current voltage information is supplied from the direct-current voltage detector 6. When the direct-current voltage controller 12 and the interrupter 13 are electrically connected to each other by the switch 23, the determinator 9 determines to either transmit the output of the direct-current voltage controller 12 to the PWM controller 14 or interrupt the output, on the basis of the supplied voltage value and information.

The current waveforms are supplied from the detection circuits DT_U and DT_W to the vector controller 24, and the vector controller 24 outputs a control signal for controlling the PWM controller 14.

The interrupter 13 is connected to the direct-current voltage controller 12 or the vector controller 24 through the switch 23. When the direct-current voltage controller 12 and the interrupter 13 are connected to each other by the switch 23, the interrupter 13 operates so as to transmit the output of the direct-current voltage controller 12 to the PWM controller 14 or interrupt the output in accordance with a determination result of the determinator 9. To the switching element 2, the PWM controller 14 supplies the PWM signal based on the signal output from the interrupter 13.

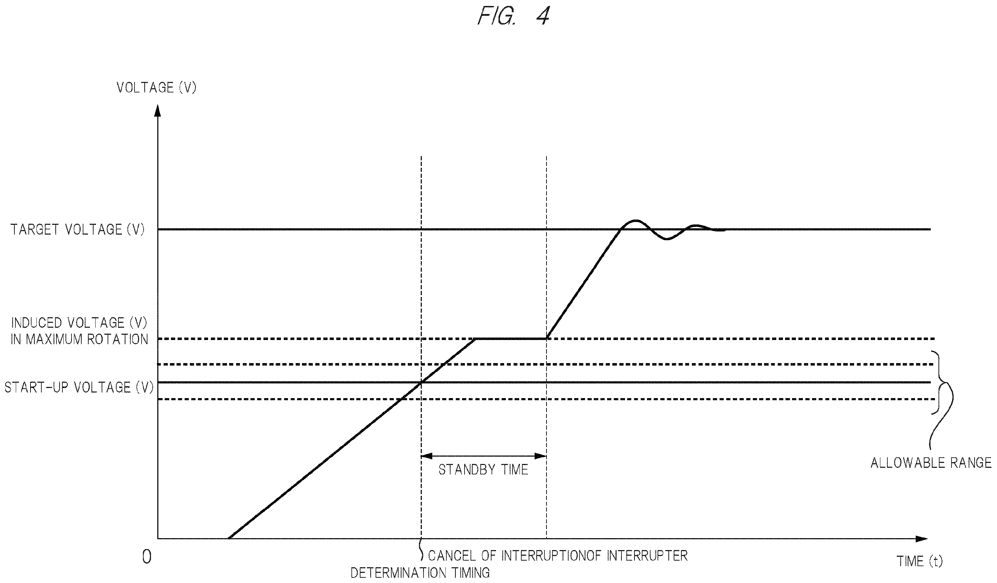

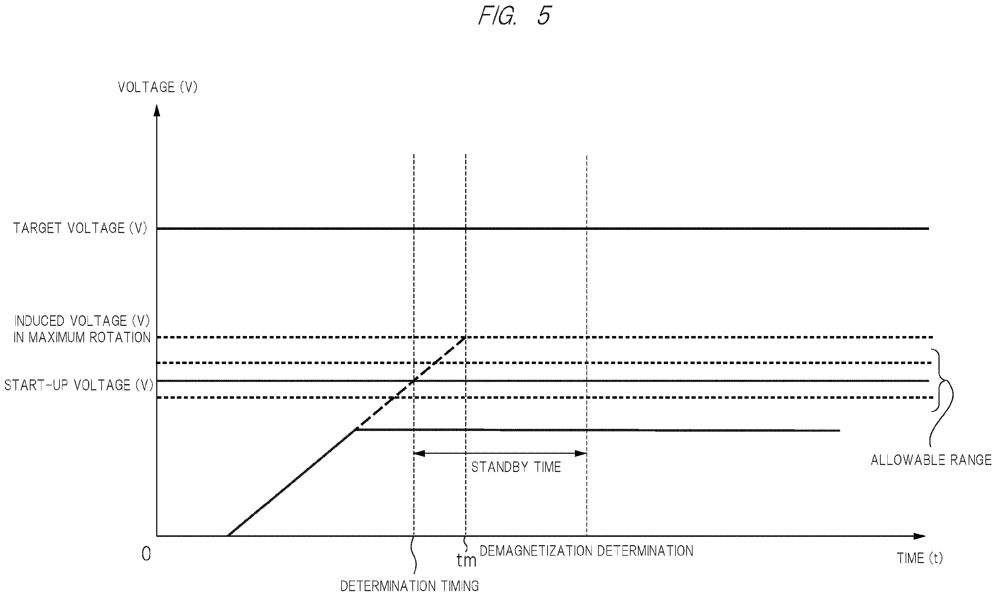

In later explanation with reference to FIGs. 4 and 5, before the start up for the operation of the switching element 2, the power converter 100 according to the first embodiment determines whether the magnet in the rotary machine 1 has been demagnetized or not. During the determination of whether the magnet has been demagnetized or not, the switch 23 operates so as to electrically connect the direct-current voltage controller 12 and the interrupter 13. On the other hand, during the operation of the switching element 2, the switch 23 operates so as to electrically connect the vector controller 24 and the interrupter 13. And, during the operation of the switching element 2, the interrupter 13 operates so as to transmit the control signal output from the vector controller 24 to the PWM controller 14. Therefore, during the operation of the switching element 2, the PWM signal depending on the voltage waveforms of the wirings LU, LV and LW is output from the PWM controller 14, and the switching operation of the switching element 2 is appropriately controlled. Principal circuit blocks will be individually explained as follows.

### <<Frequency Detection Circuit>>

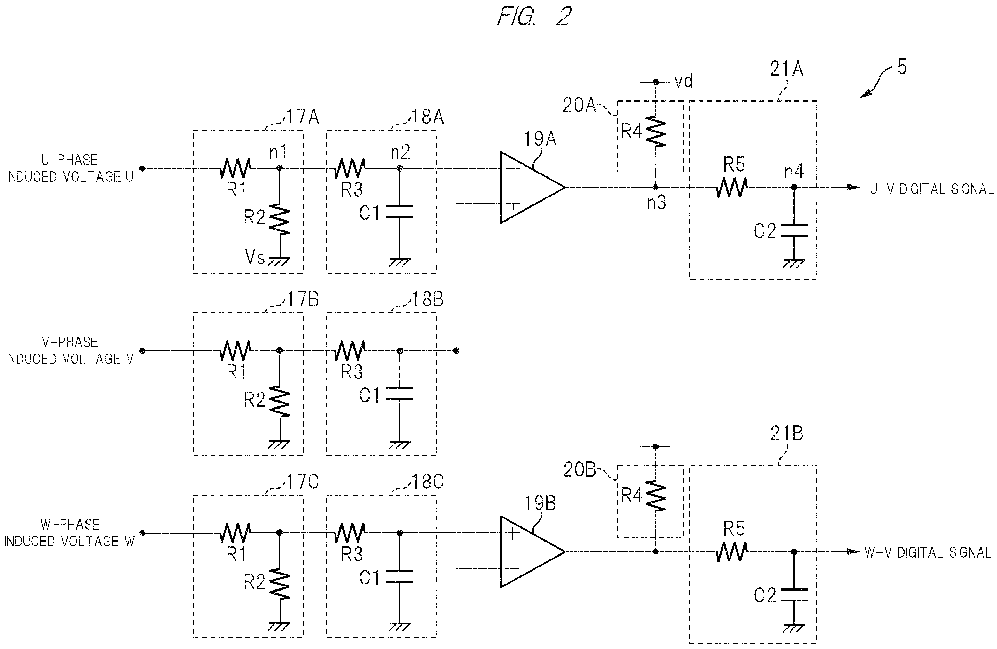

FIG. 2 is a circuit diagram showing a configuration of the frequency detection circuit in the first embodiment. The frequency detection circuit 5 includes voltage-division circuits 17A to 17C, filter circuits 18A to 18C, comparators 19A and 19B, pull-up circuits 20A and 20B, and filter circuits 21A and 21B. Although not particularly limited, the voltage-division circuits 17A to 17C have the same configuration as one another, the filter circuits 18A to 18C also have the same configuration as one another, and the filter circuits 21A and 21B also have the same configuration as each other.

In this explanation, the voltage-division circuits and the filter circuits will be explained as represented by the voltage-division circuit 17A and the filter circuits 18A and 21A. The voltage-division circuit 17A includes resistors R1 and R2 that are connected in series between an input and a reference voltage Vs, and a connection node "n1" between the resistors R1 and R2 is an output of the voltage-division circuit 17A. Similarly, the filter circuit 21A includes a resistor R5 and a capacitor C2 that are connected in series between an input and the reference voltage, and a connection node n4 between the resistor R5 and the capacitor C2 is an output of the filter circuit 21A.

The induced voltages U, V and W are supplied from the U phase, the V phase and the W phase of the rotary machine 1 to the voltage-division circuits 17A, 17B and 17C, respectively. The induced voltages U, V and W supplied to the voltage-division circuits 17A, 17B and 17C are divided by a voltage-division ratio that is defined by a resistance ratio of the resistors R1 and R2, and are dropped. The dropped induced voltages U, V and W are supplied to the comparators 19A and 19B through the filter circuits 18A, 18B and 18C intended to remove noises. The dropped induced voltages U, V and W are compared in a voltage value by the comparators 19A and 19B, and are supplied as the digital signals to the filter circuits 21A and 21B. The filter circuits 21A and 21B remove the noises from the input digital signals, and output the signals as a U-V digital signal and a W-V digital signal. Note that a resistor R4 is connected between a power-supply voltage Vd and the connection node "n3" of the output of the comparator 19A or 19B. Each of the pull-up circuits 20A and 20B is made of this resistor R4.

### <<Frequency Detection Circuit and Rotation-Number Regenerator>>

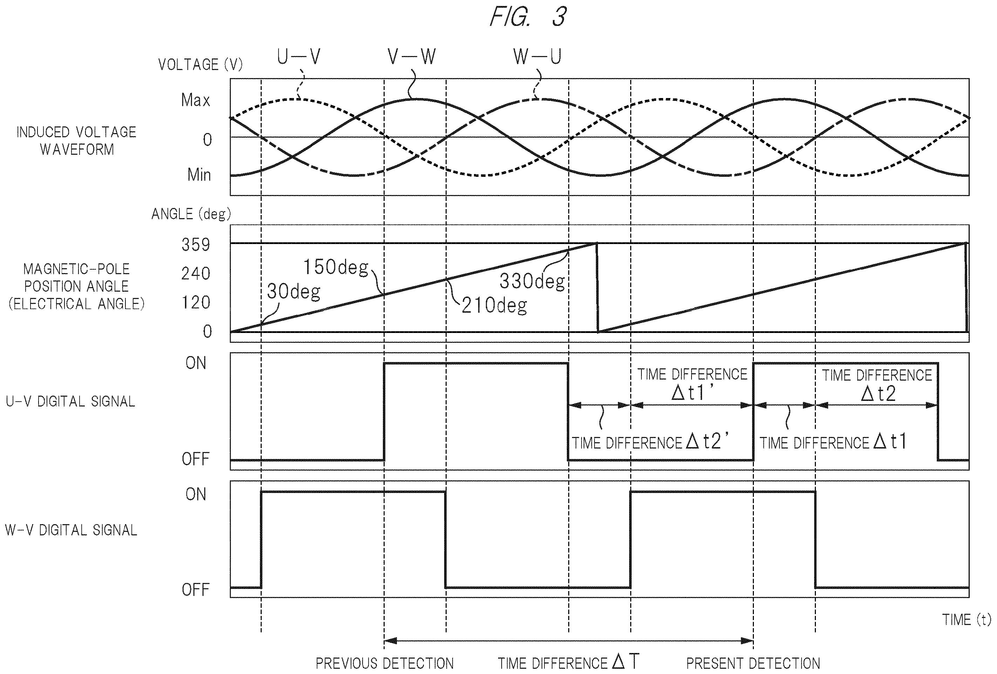

FIG. 3 is a timing chart for explaining the frequency detection circuit and the rotation-number regenerator in the first embodiment.

The frequency detection circuit 5 forms the U-V digital signal and the W-V digital signal containing the information of the rotation number of the rotary machine 1, a rotation direction of the same and a magnetic-pole position of the same, in accordance with a magnitude correlation among the three-phase induced voltages U, V and W that are generated during the rotation of the rotary machine 1.

More specifically, when the rotary machine 1 rotates in a state of no operation of the switching element 2, the induced voltages U, V and W are generated in the rotary machine 1. The voltage waveforms obtained when the induced voltages U, V and W are observed as a line voltage of the rotary machine 1 are illustrated as the induced voltage waveforms in FIG. 3. In FIG. 3, "U-V" means the line voltage between a U line and a V line, "V-W" means the line voltage between the V line and a W line, and "W-U" means the line voltage between the W line and the U line. As illustrated in FIG. 3, the line voltages become the three-phase alternating current, the phases of which shift from one another by 120 degrees.

As shown in FIG. 2, in the frequency detection circuit 5, the induced voltages U, V and W are dropped by the voltage-division circuits 17A to 17C, the voltage values of the dropped induced voltages are compared from one another as to the magnitude correlation by the comparators 19A and 19B, and two digital signals that are the U-V digital signal and the W-V digital signal are formed. A comparator for comparing the dropped induced voltages W and U may be arranged in the frequency detection circuit 5. However, in the later-explained rotation-number regenerator 7, the information of the rotation speed, the rotation direction and the magnetic-pole position can be acquired from the two digital signals that are acquired by the comparators 19A and 19B, and therefore, the comparator for comparing the induced voltages W and U is eliminated.

Filter time constants of the filter circuits 18A, 18C and 18C and the filter circuits 21A and 21B may be selected so as to remove the noises while the digital signals to be input to the respective filter circuits are observed. The pull-up circuits 20A and 20B are configured to provide "1 (ON state) " as logical values of the digital signals of the comparators 19A and 19B so as to prevent the digital signals from chattering immediately after the power ON of the power converter 100 to the power supply to the comparators 19A and 19B.

By the usage of the U-V digital signal and the W-V digital signal that are formed by the frequency detection circuit 5, the rotation speed, the rotation direction and the magnetic-pole position in the rotation of the rotary machine 1 in the state of no operation of the switching element 2 can be estimated. In other words, even in the state of no operation of the switching element 2, the induced voltages U, V and W are generated by the rotation of the rotary machine 1. Therefore, "1" and "0" (ON state and OFF state) can be provided as the logical values of the U-V digital signal and the W-V digital signal in accordance with the phases of the generated induced voltages U, V and W, and thus, the rotation speed, the rotation direction and the magnetic-pole position of the rotary machine 1 can be estimated by the rotation-number regenerator 7.

First, as to the rotation speed of the rotary machine 1, for example, every rise (ON) timing of the U-V digital signal is detected, and time difference ΔT between the previously-detected timing and the presently-detected timing is observed as shown in FIG. 3. Of course, time difference between drop (OFF) timings of the U-V digital signal or both time differences between the rise timings and between the drop timings may be measured. In the case of the measurement of the both time differences between the rise timings and between the drop timings of the U-V digital signal, the number of detections per one rotation of the rotary machine 1 is double, and therefore, detection accuracy of the rotation-number regenerator 7 can be improved.

The rotation-number regenerator 7 calculates a frequency of the induced voltage having a period that is the resultant time difference ΔT in the measurement, and outputs the frequency as a detection speed Ffb of the rotary machine 1. This detection speed Ffb corresponds to the rotation speed of the rotary machine 1.

Next, the estimation of the rotation direction will be explained. The rotation direction can be estimated by the measurement of the time of the rise timings and the drop timings of the U-V digital signal and the W-V digital signal.

When the rotary machine 1 positively rotates, in consideration of, for example, the rise timing of the U-V digital signal as a start point, a relation of "time difference Δt1 > time difference Δt2" is observed as a relation between the time difference Δt1 taken to the drop timing of the next detected W-V digital signal and the time difference Δt2 between the drop timing of the W-V digital signal and the drop timing of the next detected U-V digital signal.

On the other hand, when the rotary machine 1 conversely rotates, in consideration of the rise timing of the U-V digital signal as a start point, a correlation of "time difference Δt1' < time difference Δt2' " is observed as a relation between the time difference Δt1' taken to the rise timing of the next detected W-V digital signal and the time difference Δt2' between the rise timing of the W-V digital signal and the drop timing of the next detected U-V digital signal.

The rotation-number regenerator 7 estimates the rotation direction on the basis of the magnitude correlation between the time differences Δt1 and Δt2 or the time differences Δt1' and Δt2'.

Next, the estimation of the magnetic-pole position of the rotary machine 1 will be explained. The phases of the induced voltages generated in the rotary machine 1 are cooperative with the magnetic-pole position of the rotary machine 1. Meanwhile, the rise timings and the drop timings of the U-V digital signal and the W-V digital signal are cooperative with the phases of the induced voltages. Therefore, as shown as a magnetic-pole position angle in FIG. 3, the total number of the rise timings and the drop timings of the U-V digital signal and the W-V digital signal during one rotation of the rotor of the rotary machine 1 at an electric angle is four. For example, when a timing at which the magnetic-pole position is detected is the magnetic-pole position angle 30 degrees, 150 degrees, 210 degrees, or 330 degrees, of the rotary machine 1, the rotation-number regenerator 7 performs the process so that the calculated internal position information is directly updated at the rise timing or the drop timing of the U-V digital signal or the W-V digital signal.

In this case, at time except for the rise timing and the drop timing of the U-V digital signal or the W-V digital signal, the internal position information is updated so that a position update amount "θstep" depending on the above-described detection speed Ffb is added to the internal position information at an optional calculation period. In this manner, the rotation-number regenerator 7 can acquire and update the internal position information in synchronization with the magnetic-pole position of the rotary machine 1.

During the update of the internal position information at the optional calculation period, if the process for updating the internal position information is directly performed at the rise timing or the drop timing of the U-V digital signal or the W-V digital signal, positional difference "Δθ" may occur between the internal position information that is updated at the calculation period and the directly-updated internal position information. In this case, the rotation-number regenerator 7 corrects the position update amount θstep by using the PI control so that the positional difference Δθ becomes "0".

Even in the state of the operation of the switching element 2, the rotation-number regenerator 7 estimates the magnetic-pole position. However, in this state, the estimation of the rotation-number regenerator 7 is made so that the internal position information that is updated at the calculation period is the magnetic-pole position. For example, when the operating switching element 2 stops, the above-described position difference Δθ may occur. In this case, the rotation-number regenerator 7 corrects the position update amount θstep as described above.

As described above, in the state of the operation of the switching element 2, the rotation-number regenerator 7 directly updates the calculated internal position information at the rise timing or the drop timing of the U-V digital signal or the W-V digital signal and does not execute the operation of estimating the magnetic-pole position. This is because the induced voltages of the rotary machine 1 cannot be observed on the wirings LU, LV and LW shown in FIG. 1 in the state of the operation of the switching element 2. In other words, in the state of the operation of the switching element 2, the voltage waveforms on the wirings LU, LV and LW are voltage waveforms (PWM voltage waveform) generated by the operation of the switching element 2. Since the vector controller 24 and the PWM controller 14 shown in FIG. 1 control the switching of the switching element 2 through the PWM signal on the basis of this PWM voltage waveform, appropriate power is output from the power converter 100 in the state of the operation of the switching element 2.

### <Direct-Current Voltage Regenerator>

The induced voltage constant that is set by the parameter setting unit 10 is a constant for defining relation between the rotation number (min⁻¹) of the rotary machine 1 and the generated induced voltage (V). To the direct-current voltage regenerator 8, the rotation speed of the rotary machine 1 estimated in the rotation-number regenerator 7 and the induced voltage constant from the storage 11 are supplied. The direct-current voltage regenerator 8 acquires the rotation number on the basis of the supplied rotation speed, estimates the induced voltage generated in the rotary machine 1 on the basis of the acquired rotation number and the induced voltage constant, and outputs the induced voltage as a direct-current voltage regeneration value. For example, the direct-current voltage regenerator 8 estimates the induced voltage by executing the calculation using the calculated rotation number and the induced voltage constant.

### <Determinator>

The determination made by the determinator 9 will be explained with reference to the drawings. Each of FIGs. 4 and 5 is a voltage waveform diagram showing a start-up sequence of the power converter in the first embodiment. For example, FIG. 4 shows a start-up sequence without demagnetization of the magnet in the rotary machine 1, that is, the magnet of the rotor, and FIG. 5 shows a start-up sequence with the demagnetization of the magnet. In FIGs. 4 and 5, a horizontal axis shows the time, and a vertical axis shows the voltage.

### <<Start-Up Sequence>>

First, the start-up sequence in the normal case that is without the demagnetization will be described with reference to FIG. 4. The rotation number reaches the maximum rotation number after the rotation of the rotary machine 1, and then, the switching element 2 shown in FIG. 1 is operated. By the operation of the switching element 2, the voltage rising operation is performed, so that the voltage that is output from the power converter 100 rises. When the output voltage reaches the target voltage, the switching operation of the switching element 2 is controlled by the PWM signal so that the output voltage of the power converter 100 is maintained to be the target voltage.

### <<Case Without Demagnetization>>

The rotary machine 1 starts to rotate while the interruption of the interrupter 13 is conducted by the determinator 9. The induced voltage is generated by the start of the rotation of the rotary machine 1, and the induced voltage rises in accordance with the increase of the rotation number. At this time, the switching element 2 does not operate, in other words, the IGBT TR in the switching element 2 is turned OFF. However, the three-phase alternating-current induced voltages U, V and W are converted into the direct-current voltage by the three-phase full-wave rectification circuit made of the freewheeling diode DD and the smoothing capacitor 3 in the switching element 2. This converted direct-current voltage also rises in accordance with the increase in the rotation number of the rotary machine 1 as shown with a solid line of FIG. 4.

The determinator 9 determines whether or not the direct-current voltage regeneration value output from the direct-current voltage regenerator 8 reaches the start-up voltage set by the parameter setting unit 10. The determinator 9 determines a timing at which the direct-current voltage regeneration value reaches the start-up voltage set by the parameter setting unit 10 as a determination timing, and sets a predetermined period starting from the determination timing as standby time. In this standby period, the determinator 9 compares the induced voltage with the direct-current voltage expressed by the direct-current voltage information output from the direct-current voltage detector 6. In the first embodiment, a predetermined voltage range centering the induced voltage is set as an allowable range of the induced voltage. A value of this allowable range is not particularly limited, but is defined by the demagnetization determining threshold set by the parameter setting unit 10. For example, the allowable range is set so that the demagnetization determining threshold is added to upper and lower ranges centering the induced voltage.

In the standby period, if the direct-current voltage expressed by the direct-current voltage information is within the allowable range of the induced voltage, the determinator 9 determines that the demagnetization does not occur. In other words, since the difference between the induced voltage and the direct-current voltage expressed by the direct-current voltage information does not exceed the demagnetization determining threshold, the determinator 9 determines that the demagnetization does not occur. In this case, the determinator 9 cancels the interruption of the interrupter 13 after elapse of the standby time. In this manner, the signal is supplied from the direct-current voltage controller 12 to the PWM controller 14 through the switch 23, and the PWM controller 14 operates the switching element 2 by using the PWM signal. As a result, the voltage output from the power converter 100 rises. Then, the switch 23 is switched so as to connect the vector controller 24 and the interrupter 13. After that, the PWM controller 14 outputs the PWM signal in accordance with the control signal output from the vector controller 24, and operates the switching element 2.

### <<Case With Demagnetization>>

Since the magnet is being demagnetized in the case of FIG. 5, the induced voltage generated by the rotary machine 1 is low even in the increase of the rotation number of the rotary machine 1.

As similar to FIG. 4, the timing at which the induced voltage estimated by the direct-current voltage regenerator 8 reaches the induced voltage set by the parameter setting unit 10 is set as the determination timing by the determinator 9. Since the magnet is being demagnetized, the direct-current voltage expressed by the direct-current voltage information output from the direct-current voltage detector 6 is out of the allowable range of the induced voltage in the standby time as shown with the sold line of FIG. 5, and is lower than the allowable range of the induced voltage. In other words, the difference between the induced voltage and the direct-current voltage expressed by the direct-current voltage information exceeds the demagnetization determining threshold. In FIG. 5, a term "tm" indicates the timing at which the rotation number of the rotary machine 1 reaches the maximum rotation number. If a state in which the direct-current voltage expressed by the direct-current voltage information is not within the allowable range of the induced voltage even once in the standby time is continued even when the rotation number of the rotary machine 1 reaches the maximum rotation number, the determinator 9 determines that the demagnetization occurs, and stores the alert information showing that the magnet is being demagnetized, into the storage 11. The alert information stored in the storage 11 is displayed on the display 15 shown in FIG. 1. And, the alert information is transmitted to the higher-level device 104 through the communication, and the higher-level device 104 can also recognize that the magnet is being demagnetized.

If the determinator 9 determines that the magnet is being demagnetized, the determinator 9 maintains the interruption state of the interrupter 13 even after the elapse of the standby time. Therefore, the signal is not supplied to the PWM controller 14, and thus, the non-operation state in which the switching element 2 does not operate is maintained.

Since the user is notified of the occurrence of the demagnetization through the alert information, the user stops, for example, the rotary machine 1 and the power converter 100. In this manner, the occurrences of the vibration and the noises can be prevented.

Note that the rotation speed of the rotary machine 1 estimated in the rotation-number regenerator 7 is supplied to the determinator 9. It can be determined whether or not the rotation number of the rotary machine 1 reaches the maximum rotation number, from the estimated rotation speed supplied from the rotation-number regenerator 7 to the determinator 9.

The example of also determining whether or not the rotation number of the rotary machine 1 reaches the maximum rotation number for determining the occurrence of the demagnetization has been explained. However, the example is not limited to this. For example, the determinator 9 can determine the occurrence of the demagnetization when the direct-current voltage expressed by the direct-current voltage information is within the allowable range of the induced voltage a few times in the standby time or when the average voltage of the direct-current voltage expressed by the direct-current voltage information in the standby time is without the allowable range of the induced voltage.

As described above, the determinator 9 compares the induced voltage and the direct-current voltage expressed by the direct-current voltage information. In this comparison, the direct-current voltage expressed by the direct-current voltage information corresponds to the measurement value measured in the rotation of the rotary machine 1, and the induced voltage corresponds to the reference value for the comparison. In the first embodiment, as the induced voltage to be the reference value, the direct-current voltage regeneration value output from the direct-current voltage regenerator 8 is used. However, as the reference value, the induced voltage set by the parameter setting unit 10 may be used.

### <Direct-Current Voltage Detection Circuit, Direct-Current Voltage Detector and Direct-Current Voltage Controller>

The direct-current voltage detection circuit 4 is configured to drop the voltage on both ends of the smoothing capacitor 3 by using a voltage-division circuit having the same configuration as that of the voltage-division circuit 17A explained in FIG. 2, and to output the resultant dropped voltage through an operational amplifier or others. By the dropping of the voltage, the voltage on both ends of the smoothing capacitor 3 is converted into an analog signal fitted with an input voltage range of the microcomputer 102.

The direct-current voltage detector 6 includes a calculator and an A/D converter converting a direct-current voltage of the supplied analog signal into a digital signal, and outputs the digital signal corresponding to the direct-current voltage of the analog signal as the direct-current voltage information.

The direct-current voltage controller 12 is a calculator that performs a PID control or a PI control so that the difference between the target voltage set by the parameter setting unit 10 and the direct-current voltage information output from the direct-current voltage detector 6 is "0", and that outputs a PWM order to the PWM controller 14 by using the signal to control the switching element 2.

### (Second Embodiment)

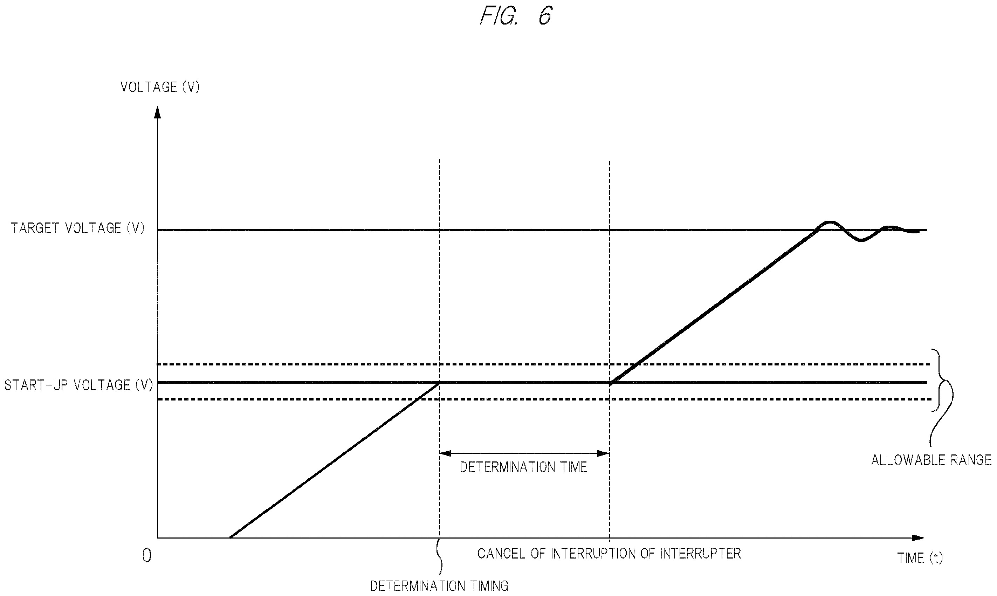

FIG. 6 is a voltage waveform diagram showing a start-up sequence of a power converter in a second embodiment. The second embodiment provides the power converter in consideration of variation in the rotation number of the rotary machine 1.

The rotation number of the rotary machine 1 is controlled so as to be a constant value during predetermined time in the starting up. This predetermined time is set as the determination time. In the determination time, the determinator 9 executes the determination of whether or not the direct-current voltage expressed by the direct-current voltage information is within the allowable range of the induced voltage, a plurality of times.

In FIG. 6, the rotary machine 1 is controlled at a determination start timing so as to have a predetermined rotation number, and is controlled so as to keep the predetermined rotation number during the determination time. In this manner, even in the variation in the rotation number of the rotary machine 1, the accuracy of the determination for the demagnetization can be improved.

### (Third Embodiment)

A power converter according to a third embodiment compares the induced voltages generated before and after the demagnetization of the rotary machine 1, and determines that the magnet is being demagnetized if a difference in the comparison exceeds a predetermined threshold. More specifically, the induced voltage generated before the demagnetization is measured at the time of test operation when a power generator is installed or others. In this measurement, the rotation number of the rotary machine is also measured. The measured rotation number and induced voltage generated before the demagnetization are stored in an electrically-rewritable non-volatile memory that is mounted on the power converter.

After the operation of the power generator starts, the induced voltage and the rotation number of the rotary machine are measured at an optional timing. In other words, an induced voltage at the same rotation number as the rotation number measured before the demagnetization is measured. The induced voltage measured at the time of the operation and the induced voltage recorded in the non-volatile memory are compared with each other by the determining unit. If the difference between the induced voltages exceeds the threshold, the determining unit makes the alert showing the occurrence of the demagnetization.

In this embodiment, the example of the measurement for the rotation number and the induced voltage generated before the demagnetization has been explained. However, this embodiment is not limited to this example. For example, designed values of the induced voltage and the rotation number at the time of the designing of the power generator may be previously stored in the electrically-rewritable non-volatile memory. This manner can eliminate the measurements for the rotation number and the induced voltage generated before the demagnetization.

According to the first to third embodiments, even in no operation of the power converter, in other words, even in no operation of the switching element, if the rotary machine rotates, it can be detected whether or not the magnet in the rotary machine is being demagnetized. Therefore, before the operation of the switching element, the outside such as the user can be notified of the abnormal state such as the demagnetization through the display of the power converter and/or the higher-level device. The notified user stops, for example, the power generator, so that the occurrences of the noises and the vibration caused by the demagnetization can be prevented.

In the foregoing, the invention made by the present inventors has been concretely described on the basis of the embodiments. However, it is needless to say that the present invention is not limited to the foregoing embodiments, and the scope of the present invention is defined by the appended claims.

### EXPLANATION OF REFERENCE CHARACTERS

- 1: rotary machine
- 2: switching element
- 3: smoothing capacitor
- 100: power converter
- 101: circuit unit
- 102: microcomputer unit
- 103: operation unit
- 104: higher-level device
- U, V and W: induced voltage

## Claims

1. A power converter (100) comprising:
a smoothing circuit including a capacitor (3), connectable to a rotary machine (1) of a power generator, and smoothing a voltage induced by rotation of the rotary machine (1),
a plurality of switching elements (2) connectable to the rotary machine (1), the switching elements (2) connected to the smoothing circuit and switching of which is controlled in accordance with the rotation of the rotary machine (1);
a microcomputer unit (102) which is configured to supply a PWM signal for controlling the plurality of switching elements,
a storage (11) storing a motor constant of the power generator; and
a calculator calculating a reference voltage by using the motor constant and a rotation number of the rotary machine (1);
the power converter (100) is **characterised by**
a comparator (9) comparing the reference voltage with a measurement voltage measured during rotation of the rotary machine (1) and detecting a difference between the voltages for a predetermined period;
wherein the comparator (9) determines to either transmit or interrupt, in an interruption state, the output of a direct-current voltage controller (12) to a PWM controller (14) for controlling the plurality of switching elements, on the basis of the reference voltage and the measurement voltage;
an alert unit making a demagnetization alert when the difference exceeds a predetermined threshold,
wherein the measurement voltage is obtained from a voltage applied to the capacitor (3), and
during the measurement of the measurement voltage, the plurality of switching elements (2) are not operated,
wherein the comparator cancels the interruption state after elapse of the predetermined period when the difference does not exceed the predetermined threshold;
wherein the comparator maintains the interruption state even after the elapse of the predetermined period when the difference exceeds the predetermined threshold.

2. A method of controlling a power converter (100) including:
a calculator calculating a reference voltage induced by rotation of a rotary machine (1) by using a motor constant of a power generator and a rotation number of the rotary machine (1) of the power generator;
a plurality of switch elements (2), switching of which is controlled in accordance with rotation of the rotary machine (1),
wherein during the measurement of the measurement voltage, the plurality of switching elements (2) are not operated,
the method **characterized by** the steps of:
comparing a reference voltage calculated by the calculator with a measurement voltage induced by the rotation of the rotary machine (1) before operation of the plurality of switching elements (2) for a predetermined period; and
wherein a determination to either transmit or interrupt, in an interruption state, the output of a direct-current voltage controller (12) to a PWM controller (14) for controlling the plurality of switching elements is performed on the basis of the reference voltage and the measurement voltage;
determining whether or not difference between the reference voltage and the measurement voltage exceeds a predetermined threshold,
cancelling the interruption state after elapse of the predetermined period when the difference does not exceed the predetermined threshold;
maintaining the interruption state even after the elapse of the predetermined period when the difference exceeds the predetermined threshold.

3. The method of controlling the power converter (100) according to claim 2,
wherein, in the step of determination, when it is determined that the difference exceeds the predetermined threshold, demagnetization is alerted.

4. The method of controlling the power converter (100) according to claim 3,
wherein the reference voltage has a predetermined allowable voltage range, and,
in the step of determination, it is determined whether or not the measurement voltage in a predetermined period is out of the predetermined allowable voltage range.

## Patentansprüche

1. Leistungsumsetzer (100), der Folgendes umfasst:
eine Glättungsschaltung, die einen Kondensator (3) enthält, der mit einer rotierenden Maschine (1) eines Leistungsgenerators verbunden werden kann und eine Spannung glättet, die durch die Rotation der rotierenden Maschine (1) induziert wird,
mehrere Schaltelemente (2), die mit der rotierenden Maschine (1) verbunden werden können, wobei die Schaltelemente (2) mit der Glättungsschaltung verbunden sind und ihr Schaltvorgang in Übereinstimmung mit der Rotation der rotierenden Maschine (1) gesteuert wird;
eine Mikrocomputereinheit (102), die konfiguriert ist, ein PWM-Signal zum Steuern der mehreren Schaltelemente zuzuführen,
einen Speicher (11), der eine Motorkonstante des Leistungsgenerators speichert; und
eine Recheneinrichtung, die unter Verwendung der Motorkonstante und einer Drehzahl der rotierenden Maschine (1) eine Referenzspannung berechnet;
wobei der Leistungsumsetzer (100) **gekennzeichnet ist durch**
einen Komparator (9), der die Referenzspannung mit einer Messspannung vergleicht, die während der Rotation der rotierenden Maschine (1) gemessen wird, und eine Differenz zwischen den Spannungen für einen vorgegebenen Zeitraum detektiert,
wobei der Komparator (9) auf der Grundlage der Referenzspannung und der Messspannung bestimmt, den Ausgang einer Gleichspannungs-Steuereinheit (12) an eine PWM-Steuereinheit (14) zum Steuern der mehreren Schaltelemente entweder zu übertragen oder in einem Unterbrechungszustand zu unterbrechen;
eine Alarmeinheit, die einen Entmagnetisierungsalarm bewirkt, wenn die Differenz einen vorgegebenen Schwellenwert überschreitet,
wobei die Messspannung aus einer Spannung erhalten wird, die an den Kondensator (3) angelegt wird, und
die mehreren Schaltelemente (2) während der Messung der Messspannung nicht betätigt werden,
wobei der Komparator den Unterbrechungszustand nach dem Verstreichen des vorgegebenen Zeitraums beendet, wenn die Differenz den vorgegebenen Schwellenwert nicht überschreitet;
wobei der Komparator den Unterbrechungszustand selbst nach dem Verstreichen des vorgegebenen Zeitraums aufrechterhält, wenn die Differenz den vorgegebenen Schwellenwert überschreitet.

2. Verfahren zum Steuern eines Leistungsumsetzers (100), das Folgendes enthält:
Berechnen einer Referenzspannung, die durch die Rotation einer rotierenden Maschine (1) induziert wird, unter Verwendung einer Motorkonstante eines Leistungsgenerators und einer Drehzahl der rotierenden Maschine (1) des Leistungsgenerators durch eine Recheneinrichtung;
mehrere Schaltelemente (2), deren Schaltvorgang in Übereinstimmung mit der Rotation der rotierenden Maschine (1) gesteuert wird,
wobei die mehreren Schaltelemente (2) während der Messung der Messspannung nicht betätigt werden,
wobei das Verfahren **gekennzeichnet ist durch** die folgenden Schritte:
Vergleichen einer Referenzspannung, die durch die Recheneinrichtung berechnet wird, mit einer Messspannung, die durch die Rotation der rotierenden Maschine (1) induziert wird, vor der Betätigung der mehreren Schaltelemente (2) für einen vorgegebenen Zeitraum; und
wobei eine Bestimmung, den Ausgang einer Gleichspannungs-Steuereinheit (12) an eine PWM-Steuereinheit (14) zum Steuern der mehreren Schaltelemente entweder zu übertragen oder in einem Unterbrechungszustand zu unterbrechen, auf der Grundlage der Referenzspannung und der Messspannung durchgeführt wird;
Bestimmen, ob eine Differenz zwischen der Referenzspannung und der Messspannung einen vorgegebenen Schwellenwert überschreitet oder nicht,
Beenden des Unterbrechungszustands nach dem Verstreichen des vorgegebenen Zeitraums, wenn die Differenz den vorgegebenen Schwellenwert nicht überschreitet;
Aufrechterhalten des Unterbrechungszustands selbst nach dem Verstreichen des vorgegebenen Zeitraums, wenn die Differenz den vorgegebenen Schwellenwert überschreitet.

3. Verfahren zum Steuern des Leistungsumsetzers (100) nach Anspruch 2,
wobei im Bestimmungsschritt dann, wenn bestimmt wird, dass die Differenz den vorgegebenen Schwellenwert überschreitet, ein Alarm bezüglich einer Entmagnetisierung bewirkt wird.

4. Verfahren zum Steuern des Leistungsumsetzers (100) nach Anspruch 3,
wobei die Referenzspannung einen vorgegebenen zulässigen Spannungsbereich aufweist, und
im Bestimmungsschritt bestimmt wird, ob die Messspannung in einem vorgegebenen Zeitraum außerhalb des vorgegebenen zulässigen Spannungsbereichs liegt oder nicht.

## Revendications

1. Convertisseur de puissance (100) comprenant :
un circuit de lissage incluant un condensateur (3), pouvant être connecté à une machine rotative (1) d'un générateur de puissance, et lissant une tension induite par rotation de la machine rotative (1),
une pluralité d'éléments de commutation (2) pouvant être connectés à la machine rotative (1), les éléments de commutation (2) étant connectés au circuit de lissage et une commutation de ceux-ci étant commandée en accord avec la rotation de la machine rotative (1) ;
une unité micro-ordinateur (102) qui est configurée pour alimenter un signal PWM pour commander la pluralité d'éléments de commutation,
un moyen de stockage (11) stockant une constante de moteur du générateur de puissance ; et
un calculateur calculant une tension de référence en utilisant la constante de moteur et un nombre de rotations de la machine rotative (1) ;
le convertisseur de puissance (100) étant **caractérisé par**
un comparateur (9) qui compare la tension de référence à une tension de mesurage mesurée pendant une rotation de la machine rotative (1) et qui détecte une différence entre les tensions pendant une période prédéterminée ;
dans lequel le comparateur (9) détermine s'il faut soit transmettre, soit interrompre, dans un état d'interruption, la sortie d'un contrôleur de tension en courant continu (12) vers un contrôleur PWM (14) pour commander la pluralité d'éléments de commutation, sur la base de la tension de référence et de la tension de mesurage ;
une unité d'alerte émettant une alerte de démagnétisation quand la différence dépasse un seuil prédéterminé,
dans lequel la tension de mesurage est obtenue à partir d'une tension appliquée sur le condensateur (3), et
pendant le mesurage de la tension de mesurage, la pluralité d'éléments de commutation (2) ne sont pas actionnés,
dans lequel le comparateur annule l'état d'interruption après écoulement de la période prédéterminée quand la différence ne dépasse pas le seuil prédéterminé ;
dans lequel le comparateur maintient l'état d'interruption même après écoulement de la période prédéterminée quand la différence dépasse le seuil prédéterminé.

2. Procédé de commande d'un convertisseur de puissance (100) incluant :
un calculateur calculant une tension de référence induite par rotation d'une machine rotative (1) en utilisant une constante de moteur d'un générateur de puissance et un nombre de rotations de la machine rotative (1) du générateur de puissance ;
une pluralité d'éléments de commutation (2), dont une commutation est commandée en accord avec une rotation de la machine rotative (1),
dans lequel, pendant le mesurage de la tension de mesurage, la pluralité d'éléments de commutation (2) ne sont pas actionnés,
le procédé étant **caractérisé par** les étapes consistant à :
comparer une tension de référence calculée par le calculateur à une tension de mesurage induite par la rotation de la machine rotative (1) avant actionnement de la pluralité d'éléments de commutation (2) pendant une période prédéterminée ; et
dans lequel une détermination quant à savoir s'il faut transmettre ou interrompre, dans un état d'interruption, la sortie d'un contrôleur de tension en courant continu (12) vers un contrôleur PWM (14) pour commander la pluralité d'éléments de commutation est effectuée sur la base de la tension de référence et de la tension de mesurage ;
déterminer si une différence entre la tension de référence et la tension de mesurage dépasse ou ne dépasse pas un seuil prédéterminé,
annuler l'état d'interruption après écoulement de la période prédéterminée quand la différence ne dépasse pas le seuil prédéterminé ;
maintenir l'état d'interruption même après écoulement de la période prédéterminée quand la différence dépasse le seuil prédéterminé.

3. Procédé de commande du convertisseur de puissance (100) selon la revendication 2,
dans lequel, dans l'étape de détermination, quand il est déterminé que la différence dépasse le seuil prédéterminé, une alerte de démagnétisation est émise.

4. Procédé de commande du convertisseur de puissance (100) selon la revendication 3,
dans lequel la tension de référence a une plage de tensions admissibles prédéterminée, et,
dans l'étape de détermination, il est déterminé si la tension de mesurage dans une période prédéterminée est ou n'est pas en dehors de la plage de tensions admissibles prédéterminée.
